# FASCICULE DE BREVET EUROPEEN

(11) **EP 0 522 540 B1**
(45) Date de publication et mention de la délivrance du brevet: **12.06.1996**
(21) Numéro de dépôt: 92111611.7
(22) Date de dépôt: 09.07.1992
(51) Int. Cl.: H04Q 1/14, H01T 4/00

(54) **Tête de câble à protection pour répartiteur téléphonique**
Kabelkopf mit Überlastungssicherung für Fernsprechverteiler
Cable terminal with protection for telephone distributor

(30) Priorité: 12.07.1991 FR 9108846
(43) Date de publication de la demande: 13.01.1993
(73) Titulaire: ALCATEL CABLE INTERFACE, F-08330 Vrigne aux Bois (FR)
(72) Inventeur: Audeval, Fabrice, F-08090 Aiglemont (FR); Chezyl, Eric, F-08200 Sedan (FR)
(74) Mandataire: Weinmiller, Jürgen

(56) Documents cités:
- EP-A- 0 123 905
- EP-A- 0 316 259
- FR-A- 2 469 020
- FR-A- 2 490 029
- FR-A- 2 498 865
- FR-A- 2 530 910
- FR-A- 2 609 359

## Description

La présente invention concerne les répartiteurs téléphoniques et porte plus particulièrement sur une tête de câble destinée à être installée sur les répartiteurs téléphoniques.

Les têtes de câble concernées sont déjà en tant que telles connues. Elles permettent la séparation et la protection des paires de lignes d'un ou de plusieurs câbles pour leur raccordement à un autocommutateur. Selon la gamme de produits actuellement commercialisés les têtes de câble permettent le raccordement de 28, 56, 112, 224, 448 ou 896 paires de lignes d'un ou de plusieurs câbles à un autocommutateur. Ce raccordement est assuré par des jarretières.

Ces têtes de câble sont constituées par un ensemble de connexion de 28 ou 56 paires, pour des têtes correspondantes de 28 ou 56 paires, ou d'un ou plusieurs ensembles de connexion de 112 paires pour des têtes de 112 à 896 paires. Elles comportent des ensembles de protection affectés à chaque ensemble de connexion et protégeant chaque ligne contre d'éventuelles surtensions possibles. Les têtes de câble ainsi constituées et protégées sont fixées en une ou plusieurs colonnes sur les fermes du répartiteur.

Selon les documents FR-A-2 440 636 et FR-A-2 467 500, chaque ensemble de connexion comporte un ou une pluralité de blocs modulaires de connexion empilés les uns sur les autres. En particulier, chaque bloc modulaire assure la connexion de 7 paires. Ces blocs de connexion sont communément appelés galette de connexion. La protection de chaque paire de la galette est assurée par un module de protection.

Selon le mode de réalisation décrit dans le document FR-A-2 467 500 notamment, chaque galette est constituée par une embase isolante portant d'une part une rangée de contacts arrière pour les 7 paires de conducteurs de câble et une rangée de contacts avant pour les fils de jarretières d'utilisation, en regard l'une de l'autre, et d'autre part une barrette de masse. La barrette de masse est montée dans la face arrière de la galette, elle est parallèle mais sans contact avec la rangée de contacts arrière.
Cette galette est fixée sur une goulotte arrière de passage du ou des câbles desservant un ou plusieurs ensembles de connexion, la goulotte étant elle-même fixée sur un répartiteur.

Chaque module de protection est enfiché pratiquement en totalité par l'avant, dans l'embase cloisonnée au pas des lignes. Il est constitué par un corps isolant dans lequel sont montés deux parafoudres bipolaires pour chaque ligne et portant deux contacts par parafoudre. Ces deux contacts sont reliés aux deux bornes du parafoudre considéré et sont légèrement saillants sur l'extérieur du corps. Lorsque le module est enfiché en place dans la galette, l'un des deux contacts de chaque parafoudre est raccordé à la barrette de masse et l'autre raccorde l'un des contacts arrière au contact avant de même rang, à l'intérieur de la galette.

Selon l'un ou l'autre de ces deux documents, chaque galette présente des canaux guide-fils sur l'extérieur d'au moins l'une de ses deux grandes faces, en particulier pour les jarretières la desservant. Ces canaux pour les jarretières sont en forme de crosse et débouchent d'une part sur le bord avant de la galette, au droit des contacts avant et d'autre part sur l'un de ses côtés latéraux. Sur ce côté latéral, la galette peut être munie d'un anneau de retenue des jarretières.

En outre, cette galette présente aussi des moyens d'encliquetage arrière pour sa fixation sur le rail ou goulotte de passage du ou des câbles.

De manière courante, les galettes appartenant à un même ensemble de connexion peuvent être fixées non pas directement sur le rail ou goulotte mais par l'intermédiaire d'une pièce passe-fils. Ce passe-fils présente un axe d'articulation pour les galettes. Celles-ci sont alors, en outre, bloquées relativement les unes par rapport aux autres dans l'empilement réalisé, par des tirants traversant l'empilement. L'ensemble a en outre des moyens d'identification de ses galettes individuelles et leurs différentes lignes.

La présente invention a pour but une simplification importante du montage des galettes dans leur ensemble de connexion et une fiabilité accrue des liaisons des paires, tout en assurant une protection efficace contre des surtensions éventuelles et des contacts accidentels éventuels entre paires raccordées. Elle conduit en outre à un encombrement réduit de la tête de câble résultante.

Elle a pour objet une tête de câble à protection pour répartiteur téléphonique, comportant :
- un profilé porteur métallique de fixation sur le répartiteur, recevant au moins un câble à paires de conducteurs multiples,
- au moins un ensemble de connexion fixé sur ledit profilé par l'intermédiaire d'un axe latéral solidaire du profilé, pour son ouverture et sa fermeture sur le profilé, et formé par une pluralité de galettes de connexion identiques empilées verticalement les unes sur les autres, avec chaque galette dans son ensemble considéré fermé sur le profilé équipée de connexions arrière de ligne sur l'une de ses faces dite arrière, de raccordement des paires de conducteurs de câble, et de connexions avant de ligne sur la face opposée dite avant, de raccordement de paires de fils de jarretières de ligne, pour le raccordement de lignes,
- des modules de protection de ligne, enfichables dans les galettes individuelles, chacun à dispositifs internes de protection raccordés aux lignes individuelles, pour leur protection contre des surtensions, ladite tête étant caractérisée en ce que lesdites galettes comportent, extérieurement, un système de queue d'aronde, à partie mâle et partie femelle complémentaires, sur leurs faces dites supérieure et inférieure, respectivement, s'étendant parallèlement aux bords avant et arrière desdites faces supérieure et inférieure, pour l'accrochage direct en place des galettes individuelles et leur retrait dans l'ensemble de connexion auquel chacune d'elles appartient, quand ledit ensemble de connexion est ouvert sur le profilé.

Selon une autre caractéristique, le système de queue d'aronde est à parties mâle et femelle complémentaires l'une de l'autre sur les seules parties terminales des faces supérieure et inférieure respectives, correspondant aux deux parties terminales de leurs bords avant et arrière.

Selon une autre caractéristique, la galette est en outre équipée de connexions arrière de protection de ligne chacune directement reliées dans la galette à l'une des connexions arrière de ligne et l'une des connexions avant de ligne, et que chaque module de protection est enfichable sur la face arrière de l'une quelconque des galettes.

En particulier, chaque module de protection comporte un boîtier dans lequel lesdits dispositifs de protection sont montés dans une partie dite arrière compartimentée du module considéré enfiché, des contacts dits de masse montés dans une partie dite avant du boîtier, en recevant chacun une patte de masse de chaque dispositif, et reliés à une masse commune, et des contacts dits de protection de ligne montés également dans ladite partie avant du boîtier, recevant chacun une patte de ligne de chaque dispositif et présentant une queue de connexion, saillante sur la face avant du boîtier, de raccordement à l'une des connexions arrière de protection de ligne de la galette à laquelle elle correspond.

Selon une autre caractéristique la galette est équipée en outre de connexions avant de dérivation reliées chacune à l'une des connexions avant de ligne, l'une des connexions avant de ligne et la connexion avant de dérivation, la connexion arrière de ligne et la connexion arrière de protection correspondantes appartenant à un même contact de ligne dit en H.

Selon une autre caractéristique la galette comporte un guide fils pour les jarretières de ligne et des jarretières de dérivation, monté entre les connexions avant de ligne et de dérivation. La galette définit en outre un canal arrière pour les conducteurs de câble, entre elle et la galette directement voisine.

Selon une autre caractéristique, le module de protection est avantageusement à parafoudres tripolaire et comporte un collecteur interne de masse d'une part raccordé aux pattes de masse desdits parafoudres et d'autre part présentant une queue de connexion de masse saillante sur l'avant du module, à l'une de ses extrémités pour son raccordement à une même masse distribuée sur toutes les galettes, et des contacts individuels de protection de ligne d'une part raccordés aux pattes de ligne desdits parafoudres et d'autre part définissant une rangée de pattes de connexion saillantes sur l'avant du module.

Selon une autre caractéristique, la galette est en outre équipée de poussoirs avant et de poussoirs arrière montés dans la face avant et la face arrière de la galette sur les connexions avant de ligne et de dérivation et les connexions arrière de ligne, de type connexions autodénudantes.

Avantageusement ces poussoirs sont montés imperdables dans les faces avant et arrière de la galette, et les poussoirs avant peuvent être plombés pour éviter l'accès aux connexions avant concernées.

Les caractéristiques et avantages de la présente invention ressortiront de la description donnée ci-après d'un mode préféré de réalisation illustré dans les dessins ci-annexés. Dans ces dessins :
- La figure 1 est une vue générale schématique d'une tête de câble, selon l'invention, montée sur un répartiteur,
- La figure 2 est une vue schématique de dessus partiellement éclatée des parties modulaires de la tête de câble de la figure 1, dites galette de raccordement et module de protection pour ses deux parties modulaires essentielles,
- La figure 3 est une vue de dessus partiellement coupée d'une galette et du module de protection connecté à la galette,
- La figure 4 est une vue en coupe verticale de la galette et du module de protection de la figure 3 d'un ensemble de connexion de la tête de câble,
- La figure 5 représente en perspective un contact dit de ligne monté dans les galettes précitées,
- La figure 6 représente en perspective un contact dit de protection de ligne monté dans le module de protection, et illustre la disposition relative des deux contacts de protection de ligne d'une même paire, pour l'un des éléments de protection de ce module,
- La figure 7 représente une barrette de masse associée aux galettes d'un même ensemble de connexion,
- La figure 8 est une vue en coupe selon la ligne VIII-VIII de la figure 7, illustrant la retenue de cette barrette engagée sur l'une des galettes.

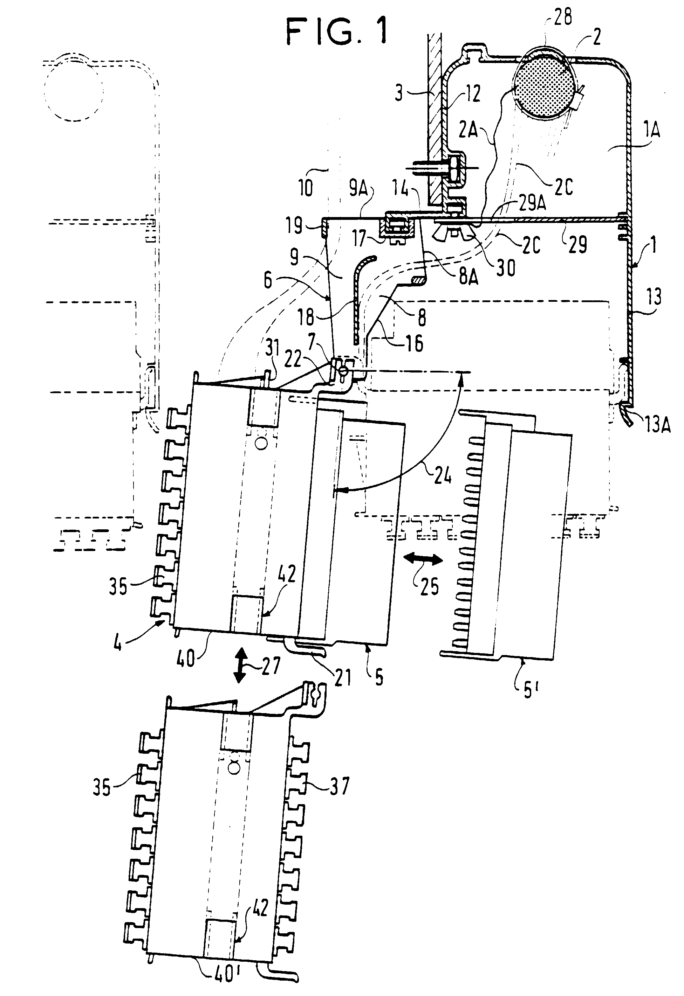

La constitution globale de la tête de câble est décrite en se référant à la figure 1, en considérant la tête telle que montée sur un répartiteur.
La tête de câble comporte essentiellement :
- un profilé porteur métallique 1, vertical, définissant une goulotte 1A pour le ou les câbles 2 de la tête et assurant la fixation de la tête sur une ferme 3 du répartiteur à l'aide de vis, cette tête étant illustrée en traits pointillés dans une position dite fermée sur son profilé porteur et en traits pleins dans une position dite ouverte sur son profilé pour l'accès à ses différentes parties constitutives,
- au moins un ensemble de connexion 4, avec chaque ensemble constitué par des galettes individuelles de connexion 40 identiques les unes aux autres et disposées les unes sur les autres en une pile verticale retenue sur l'avant du profilé porteur,
- des modules de protection 5, identiques entre eux pour chaque galette, chacun enfiché dans la face arrière de l'une des galettes 40,
- une pièce dite charnière passe fils 6, fixée le long du profilé 1 à l'aide de vis, définissant d'une part un axe de charnière 7 pour chaque ensemble de connexion 4 et d'autre part deux passages 8 et 9 pour les conducteurs 2C de câble 2 et pour les fils des jarretières 10 qui desservent chaque galette et sont raccordés par paires dans cette galette.

Le profilé porteur 1 est en aluminium. IL présente une section globale en U, avec l'une de ses branches 12 tronquée à mi-niveau par rapport à l'autre 13 et présentant un bord rabattu 14 vers l'extrémité du U. La charnière passe fils est fixée le long du bord rabattu, à l'avant de ce bord, et est saillante sur lui vers l'extérieur du U du profilé 1.

La charnière passe fils 6 présente une série d'ailettes horizontales 16 saillantes sur une toile arrière verticale 17 de fixation sur le bord rabattu 14. Ces ailettes horizontales 16 sont entre elles au pas des galettes 40 empilées de chaque ensemble de connexion. L'axe 7 relie le bord avant des ailettes 16. Ces ailettes définissent entre elles les deux passages 8 et 9 de conducteurs de câble et de fils de jarretières. Elles présentent chacune une nervure arquée 18 s'étendant sensiblement de la toile arrière 17 à l'axe 7 et séparant l'une de l'autre les deux passages 8 et 9. Elles forment entre elles sur le bord de la toile, du côté de l'intérieur du profilé porteur 1, une entrée 8A en forme d'anneau entr'ouvert de retenue des conducteurs de câble dans chaque passage 8. Elles forment entre elles sur l'autre bord de la toile, vers l'arrière du rebord 14 du profilé porteur 1, une entrée 9A en anneau fermé ou quasi fermé de retenue des fils de jarretières dans chaque passage 9. La charnière passe fils 6 assure en outre le repérage des galettes individuelles d'un même ensemble, réalisé à l'aide de numéros d'identification sur l'extrémité latérale arrière notée 19, au niveau des entrées 9A des jarretières.

Les passages 8 et les passages 9 restent par ailleurs ouverts sur le côté intérieur de la charnière passe fils 6 pour les premiers et sur l'extérieur de la charnière passe fils pour les seconds. Les conducteurs 2C de câble restent ainsi du côté intérieur de l'axe 7 et sont amenés le long de la face arrière de la galette de connexion, tandis que les fils de jarretières 10 viennent sur l'extérieur de l'axe 7, sont reçus latéralement dans chaque galette qu'ils desservent et amenés sur sa face avant, pour leur raccordement aux conducteurs dans chaque galette.

Pour sa fixation sur le profilé 1 et sur la charnière passe fils 6, chaque galette présente deux pattes 21 et 22 saillantes sur sa face arrière et ses deux côtés latéraux. La patte 22 est relativement rigide et s'enfourche sur l'axe 7, entre deux ailettes 16. La patte 21 est relativement souple et vient s'encliqueter sur l'extrémité à dent 13A de la branche non tronquée 13 du profilé 1. Dans la tête de câble, les modules de protection 5 affectés aux galettes de connexion 40 sont disposés à l'intérieur de la tête. Chaque ensemble de connexion 4 est pivotant sur l'axe 7, comme illustré par la flèche double 24, pour son ouverture sur le profilé et l'accès à sa partie arrière. Ainsi, lors de cette ouverture, les points de connexion des conducteurs et des jarretières passant à proximité de l'axe d'articulation ne sont pas ou très peu sollicités.

Lors de cette ouverture aussi, l'un quelconque des modules de protection peut être extrait ou enfiché sur l'arrière des galettes, ainsi qu'illustré par la flèche double 25 et le module de protection 5' extrait.

En outre, lors de cette ouverture également, l'une quelconque des galettes 40 peut être extraite ou remise en place dans son ensemble, ainsi qu'illustré par la flèche double 27 et la galette extraite notée 40'.

Sur le répartiteur, on note en outre en regard de la figure 1, que le profilé porteur de l'une des têtes de câble fermée sert de butée pour celle voisine de même niveau qui est ouverte.

La capacité de la tête est définie par le nombre de paires de conducteurs du ou des câbles cheminant dans la goulotte de son profilé porteur. Son organisation en ensembles de connexion, le nombre des ensembles et le nombre de galettes dans chaque ensemble sont choisis en fonction de cette capacité. En pratique chaque galette est affectée à 7 paires et un ensemble de connexion comporte jusqu'à 16 galettes. Bien entendu ces valeurs sont données à titre d'exemple.

Selon cette capacité, en particulier pour une capacité relativement faible, le ou les câbles rentrent par l'une des extrémités de la goulotte et sont fixés à cette extrémité à l'intérieur de la goulotte par des colliers individuels 28. Pour une capacité importante, en particulier de 448 à 896 paires, de préférence un ou des premiers câbles rentrent en partie inférieure dans la goulotte, un ou des deuxièmes câbles rentrent en partie supérieure dans la goulotte et d'autres câbles éventuels cheminent par l'extérieur de la goulotte et y pénètrent en partie intermédiaire par des ouvertures d'accès prévues dans son fond. Ces dispositions sont aisées à comprendre et non illustrées. On précise que les premier et deuxième câbles sont fixés à l'intérieur de la goulotte par des colliers tels que ceux précités 28 à leur entrée dans cette goulotte. Une plaque de protection 29 est fixée entre le bord rabattu 14 du profilé porteur et l'autre branche non tronquée 13 du profilé, pour fermer la goulotte au droit de chaque collier. Les autres câbles sont bridés avant d'entrer dans la goulotte. Les ouvertures intermédiaires sont fermées par des plaques métallisées de traversée, encliquetées depuis l'intérieur du profilé dans ces ouvertures lorsqu'elles ne sont pas utilisées, ou reçoivent un capot métallisé de protection de câble entrant, rapporté depuis l'arrière du profilé autour du câble entrant.

Dans la tête ainsi constituée, le profilé 1 protège les conducteurs des câbles des agressions extérieures et assure une partie du blindage contre les perturbations extérieures. Les plaques métallisées de traversées ou les capots métallisés complètent la protection électromagnétique.

La plaque 29 fermant la goulotte 1A, au niveau de la fixation du câble intérieur protège également les conducteurs des agressions sur le collier, en particulier pour les paires desservant les galettes sensiblement au niveau de ce collier. On note que cette plaque 29 a une échancrure 29A dans son bord fixé sur le bord 14 du profilé 1, pour le passage des paires desservant les galettes à son niveau.

On note en outre que dans cette tête, le profilé 1 assure la mise à la masse générale. Le fil d'écran de masse 2A de chaque câble 2 est relié à cette masse par une vis 30 fixée sur la goulotte au niveau de son entrée dans la goulotte. Les fils d'écran de masse de chaque jarretière 10, non illustrés dans cette figure 1, sont quant à eux reliés à une barrette de masse 31, affectée à chaque ensemble de connexion 4 et s'entendant verticale sur sa hauteur, à proximité de la charnière passe fils 6. Cette barrette de masse 31 a l'une de ses extrémités reliée au profilé porteur 1.

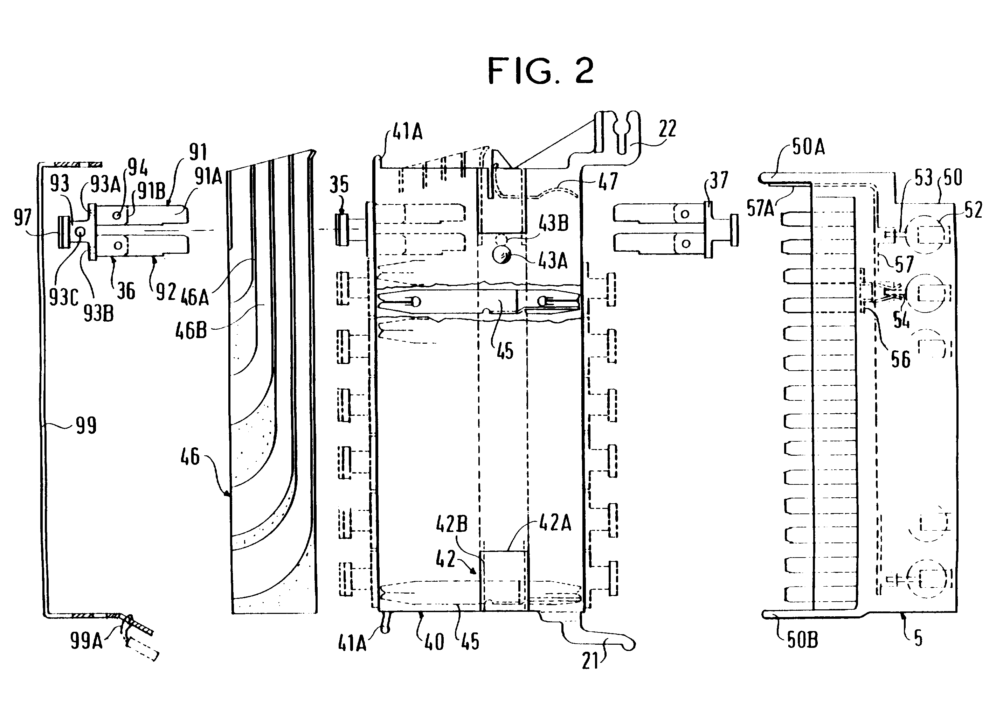

Dans cette figure 1 ou dans la figure 2, on voit en outre que chaque galette 40 retient dans sa face avant des poussoirs 35 et 36 et dans sa face arrière des poussoirs arrière 37. Les poussoirs avant 35 et 36 sont superposés deux à deux et s'étendent en deux rangées sur la longueur de la face avant, ainsi qu'illustré dans la figure 2 par un poussoir inférieur terminal avant 36 montré hors de la galette alors que le poussoir supérieur terminal correspondant 35 est en place. Les poussoirs arrière 37 sont en une seule rangée. Ils sont recouverts par le module de protection 5 lorsque celui-ci est enfiché sur l'arrière de la galette (figure 1).

Ces poussoirs 35, 36 et 37 sont identiques entre eux. Ils sont décrits ci-après. Ils sont montés de type double et assurent alors simultanément le raccordement d'une paire de conducteurs sur l'arrière de la galette et de deux fils de jarretière sur l'avant de la galette. Les poussoirs avant supérieurs 35 sont affectés aux paires de fils de jarretières de ligne et sont dits poussoirs de ligne. Les poussoirs avant inférieurs 36 sont affectés aux paires de fils de jarretières de dérivation et sont dits poussoirs de dérivation sur la tête de câble.

En regard de cette description générale ci-avant, on note qu'un capot métallique ou métallisé non montré peut être prévu pour recouvrir la face avant d'un ensemble de connexion. Il assure la continuité de blindage électromagnétique en face avant.

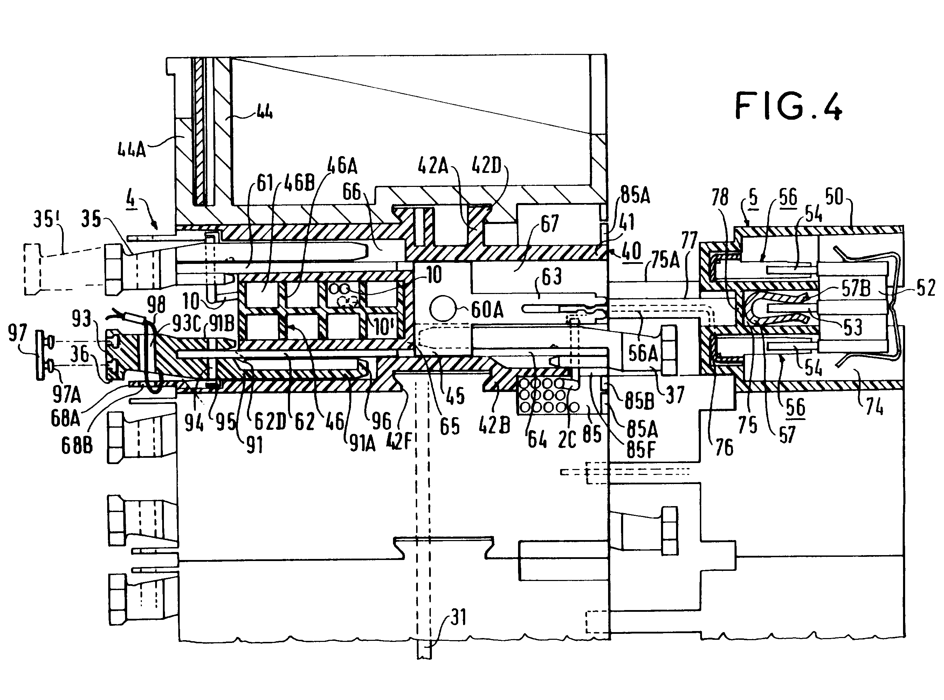

On précise immédiatement le montage relatif des galettes 40 et leur maintien dans leur ensemble de connexion 4, en regard de la figure 1 ou 2 et/ou de la figure 4.

Ces galettes sont identiques les unes aux autres. Chacune est formée dans un corps isolant 41, ayant une forme générale de parallélépipède rectangle relativement plat. Les deux faces verticales les plus longues sont les faces avant et arrière. Le corps 41 présente extérieurement sur des deux grandes faces supérieure et inférieure un système de queue d'aronde 42, à partie mâle 42A et partie femelle 42B complémentaires, de guidage et d'accrochage direct de la galette considérée sur les galettes adjacentes de l'ensemble. Pour les deux galettes terminales de l'ensemble, on prévoit sur une embase, non représentée, et sur un porte étiquettes 44 (figure 4), les mêmes dispositions, ce porte étiquettes 44 retenant une étiquette 44A d'identification des lignes des différentes galettes.

Ce système de queue d'aronde 42 est parallèle aux bords avant et arrière des grandes faces de la galette, mais n'est pas continu sur la longueur de ces faces. Avantageusement il assure un guidage de la galette, sur une autre, et son accrochage uniquement lorsqu'elle est sensiblement en place. Il est limité aux seules parties d'extrémité des deux faces supérieure et inférieure. La partie mâle 42A sur la grande face supérieure est constituée par deux nervures terminales dont les bords forment une dent saillante extérieurement 42D (figure 4). La partie femelle 42B sur la grande face inférieure est une rainure longitudinale, à bords saillants intérieurement 42F sur ses seules parties terminales et s'encastrant sous les dents 42D de la nervure engagée dans la rainure. Les nervures sont de préférence évidées.

Bien entendu les nervures précitées peuvent être une seule nervure continue sur la longueur de la face supérieure, mais à dent 42D sur chacun des bords de ses seules parties terminales.

Ainsi limité, le système de queue d'aronde permet un montage et un démontage rapides en usine, par translation réduite de chaque galette terminale sur celle inférieure de l'empilement. Il permet aussi le montage et le démontage directs sur site de l'une quelconque des galettes de son ensemble, retenu mais ouvert sur son profilé porteur, par translation de cette galette sur toute sa longueur.

Ce système de queue d'aronde assure directement l'accrochage en place des galettes les unes aux autres.

Alors que la barrette de masse 31 affectée à l'ensemble de connexion s'oppose à une translation accidentelle des galettes dans l'un des deux sens possibles, on prévoit en outre avantageusement deux bossages 43A et 43B, à l'autre bout des parties mâle et femelle du côté de cette barrette, pour faire obstacle à une translation accidentelle des galettes dans l'autre sens. Ces bossages sont décalés légèrement pour s'encastrer l'un derrière l'autre.

Les galettes de connexion 40 de l'un des ensembles de connexion 4 et leurs modules individuels de protection 5, enfichables à l'arrière, sont décrits ci-après en se référant aux figures 2 et/ou 3 ou 4. Leur description est faite pour les conditions d'exploitation c'est-à-dire en considérant la galette dans son ensemble de connexion en position fermée sur son profilé porteur et en considérant chaque galette affectée à 7 paires de lignes définies par 7 paires de conducteurs raccordées à 7 paires de fils de jarretières de ligne.

Chaque galette de connexion 40 comporte essentiellement, montés à l'intérieur du corps 41 :
- quatorze contacts de ligne 45, de liaison directe de chaque paire de conducteurs à chaque paire de fils d'une jarretière de ligne 10 ainsi qu'à chaque paire de fils d'une jarretière de dérivation 10', ces contacts 45 sont de configuration globale dite en H et montés couchés horizontalement les uns à la suite des autres dans le corps 41 en une rangée sur sa longueur, ces contacts 45 ayant les extrémités de leurs branches accessibles sur la face avant et la face arrière, en définissant deux rangées de connexions avant et deux rangées de connexions arrière,
- un guide fils 46, monté entre les deux rangées de connexions avant dans le corps 41, recevant latéralement les fils des jarretières 10 et éventuellement 10' et les guidant jusqu'aux connexions avant de l'une et éventuellement l'autre de ces rangées avant.

Elle porte, en outre, les poussoirs avant 35 et 36 retenus sur les deux rangées de connexions avant et les poussoirs arrière 37 retenus sur la rangée inférieure de connexions arrière.

Chaque module de protection 5 est décrit globalement en se référant également aux figures 2 à 4.

Il comporte essentiellement :
- un boîtier isolant 50, sensiblement de même longueur que les galettes, présentant deux pattes latérales 50A, 50B saillantes sur sa face avant, pour le guidage du module lors de son enfichage sur la face arrière de la galette qui le reçoit,
- un ensemble de parafoudres individuels, de préférence sept parafoudres tripolaires 52, montés en une rangée horizontale et retenus dans la partie arrière du boîtier 50, ces parafoudres ayant une patte centrale de masse 53 et deux pattes de ligne 54 alignées à l'intérieur du boîtier, selon sa hauteur pour chaque parafoudre, et en trois rangées sur la longueur du boîtier pour ces sept parafoudres,
- un collecteur de masse 57, monté à l'intérieur du boîtier, selon son axe longitudinal, sur lequel se raccordent les pattes de masse 53 des parafoudres,
- sept paires de contacts de protection de ligne 56, à l'intérieur du boîtier et de part et d'autre du collecteur de masse 57, sur lesquelles se raccordent les pattes de ligne 54 des parafoudres du module, ces contacts 56 étant par ailleurs saillants sur la face avant du boîtier pour leur raccordement aux connexions arrière de la rangée supérieure de la face arrière de la galette.

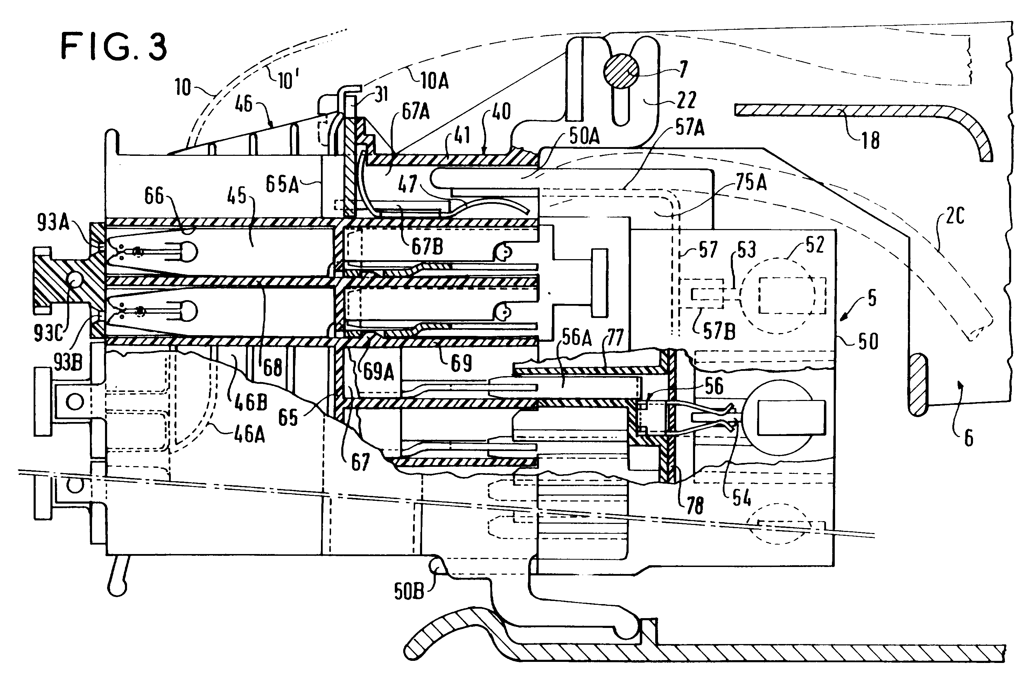

En regard des figures 2 et 3, on voit que le collecteur de masse 57 présente également une queue de connexion 57A, accessible sur l'une des extrémités de la face avant du boîtier 50. Il lui correspond un contact supplémentaire de liaison de masse 47, dans le corps de la galette, d'une part en contact à pression contre la barrette de masse 31, et d'autre part venant en liaison en pression avec la queue de connexion 57A du collecteur de masse.

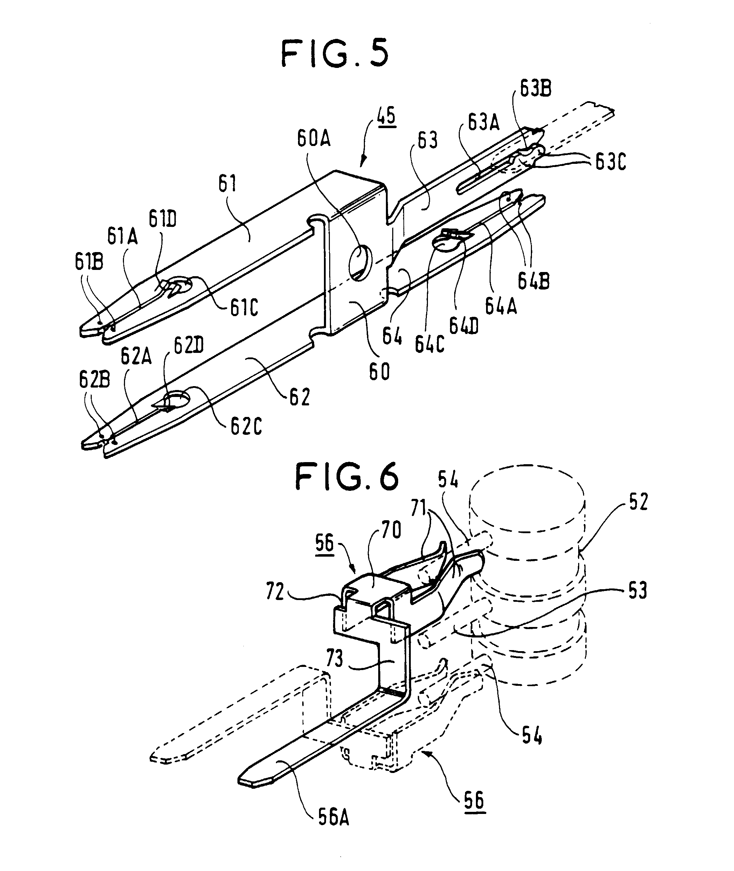

L'agencement de chaque galette est précisé après la description de ses contacts 45, faite en se référant à la figure 5 plus particulièrement.

Les contacts de ligne 45 sont tous identiques les uns aux autres. Chacun d'eux est réalisé d'un seul tenant dans une lame métallique conductrice, convenablement découpée et pliée en lui donnant la configuration dite en H. Chacun d'eux assure une liaison continue directe entre un fil de jarretière et un conducteur. Le contact 45 a un jambage entretoise 60 du H correspondant à la partie centrale non déformée de la lame initiale. Les parties de ses deux branches accessibles sur la face avant du corps de la galette sont deux des connexions avant superposées l'une à l'autre, elles sont désignées par les références 61 pour celle supérieure et 62 pour l'autre.

Les parties des branches accessibles sur la face arrière du corps de la galette sont deux connexions arrière de même rang désignées par la référence 63 pour celle supérieure dite de protection de ligne, et la référence 64 pour l'autre de raccordement de conducteur.

Les deux connexions avant 61 et 62 et la connexion arrière inférieure 64 sont obtenues par pliage de la lame initiale découpée, d'un même côté de la partie centrale 60. Les deux connexions avant 61 et 62 sont parallèles, la connexion avant inférieure 62 et la connexion arrière inférieure 64 sont dans le prolongement l'une de l'autre. La connexion arrière de protection 63 est quant à elle sensiblement dans le plan de la partie centrale 60, à un léger pliage près non référencé entre elles, du même côté que les autres connexions 61, 62 et 63. Cette connexion de protection est transversale à l'autre connexion arrière 64, et est sensiblement centrée sur l'arrière de la partie centrale 60.

La partie centrale 60 présente un trou central 60A.

Les connexions 61, 62 et 64 sont chacune du type fourche simple autodénudante. Elles ont une fente terminale 61A, 62A ou 64A selon la connexion considérée, ouverte en V sur leur bout d'accès pour des facilités d'insertion du conducteur ou fil à raccorder dans la fente. Elles ont un embouti 61B, 62B ou 64B ou deux emboutis de part et d'autre de la fente, entre son accès en V et la fente proprement dite. ELles ont en outre un trou 61C, 62C ou 64C, dans lequel aboutit leur fente à l'opposé de leur accès en V. Un crevage 61D, 62D ou 64D prévu sur le pied de la fente, au niveau du trou terminal de chaque fente, forme une petite patte d'accrochage saillante sur l'extérieur de chacune des deux connexions avant 61 et 62 et une petite patte d'accrochage saillante sur l'intérieur de la connexion arrière 64.

La connexion arrière de protection 63 est également à fente terminale 63A ouverte en V en bout. Cette fente 63A est plus large que les fentes des connexions 61, 62 et 64. Elle est de type à serrage de l'élément qui y est inséré et non autodénudante comme les autres fentes. Elle présente à proximité de son ouverture un bossage saillant 63B sur l'un de ses bords et deux autres bossages saillants 63C, encadrant le précédent, sur son autre bord.

Les contacts 45 se montent dans le corps 41 de chaque galette (figures 3, 4) avec leur partie centrale venant verticale sur la hauteur du corps. Le corps 41 est un creux intérieurement et présente une toile de séparation 65 entre sa partie avant et sa partie arrière. Dans la partie avant, une rangée de cheminées individuelles avant 66 est définie chacune des parois supérieure et inférieure du corps 41. Dans la partie arrière, une rangée de cheminées individuelles arrière 67 est définie entre les deux parois supérieure et inférieure du corps. Des cloisons 68 entre les cheminées avant de la rangée supérieure et entre celles de la rangée inférieure et des cloisons 69 entre les cheminées arrière en une seule rangée définissent le pas de montage des contacts 45. Les cheminées avant 66 de même rang des deux rangées reçoivent les deux connexions avant 61 et 62 d'un contact 45 et la cheminée arrière correspondante reçoit les deux connexions arrière 63 et 64 de ce même contact.

Les cheminées avant et arrière 66 et 67 communiquent par deux rangées de fenêtres non référencées prévues dans la toile de séparation 65, de dimensions correspondant à celles de section des connexions avant de chaque contact 45.

Chaque contact 45 est monté dans le corps 41 par la face arrière du corps. Il est poussé dans la cheminée arrière pour la mise en place de ses connexions avant dans les cheminées avant, jusqu'à ce que le bord de la partie centrale du contact arrive en butée contre la toile de séparation. Cette partie centrale est alors simultanément retenue sur un bossage 69A prévu sur la cloison arrière et engagé dans le trou 60A.

Le guide fils 46 est simplement enfoncé en place entre les deux rangées de cheminées avant.

Pareillement, les contacts de protection de ligne 56 sont décrits en se référant à la figure 6 pour une meilleure compréhension de l'agencement de chaque module de protection 5 et son raccordement par simple enfichage sur la face arrière de l'une des galettes précitées.

Les contacts 56 sont identiques entre eux. Chaque contact de protection de ligne est également d'un seul tenant et réalisé par une lame métallique conductrice convenablement découpée et pliée. Il présente une partie dite centrale 70, non déformée sur la lame initiale, de part et d'autre de laquelle s'étendent dans des directions opposées une paire d'éléments de connexion 71 et la queue de connexion précitée 56A. Les deux éléments de connexion 71 sont élastiques et en regard l'un de l'autre. Ils forment une connexion de serrage élastique, pour l'une des pattes de ligne 54 de l'un des parafoudres. Ils résultent d'une large et profonde découpe dans l'une des parties terminales dite arrière de la lame initiale et de pliage dans le même sens des bords latéraux de cette partie terminale avant de la lame initiale, puis de cambrures en forme de pince de serrage des parties terminales ou éléments de connexion 71.

La queue de connexion 56A est formée sur partie terminale opposée de la lame initiale, dite avant, maintenue nettement plus longue que la partie terminale arrière. Elle résulte d'une part de deux découpes latérales profondes 72 entre la partie terminale avant et la partie centrale 70 et d'un premier pliage, dans le même sens que les bords précités auxquels appartiennent les éléments de connexion 71, au niveau de ces découpes 72. Elle résulte d'autre part d'une longue découpe latérale d'un seul côté de cette partie terminale avant et d'un second pliage, définissant un jambage de liaison 73 décalé latéralement par rapport à la base 70 et ramenant la queue de connexion 56A parallèle à la partie centrale 70 et sensiblement dans le plan de la patte de masse 53 du parafoudre considéré.

Les deux contacts de protection de ligne 56 pour un même parafoudre 52 sont identiques et simplement retournés l'un par rapport à l'autre, pour ramener les queues de connexion des différentes paires de contacts 56 en une seule rangée horizontale sur la face avant du module de protection.

Le collecteur de masse 57, son montage et le montage des contacts 56 dans le boîtier 50 du module de protection sont précisés en se référant à nouveau à la figure 3 ou la figure 4.

Le boîtier 50 est compartimenté sur sa longueur en logements individuels 74 pour les parafoudres 52. Il présente en outre trois alvéoles ouverts dans le fond de chaque logement 74, sur la hauteur du boîtier, notés 75 pour l'alvéole central et 76 pour celui supérieur et celui inférieur. Les trois alvéoles sont affectés aux trois pattes du parafoudre retenu dans le logement arrière correspondant et à leurs raccordements au collecteur de masse 57 et à une paire de contacts 56.

Ce boîtier présente en outre une rangée de cheminées avant 77, centrée et saillante sur la longueur de la face avant du boîtier, séparée de la rangée centrale d'alvéoles 75 par une toile de séparation 78. Ces cheminées 77 sont relativement étroites. Elles communiquent alternativement avec les alvéoles supérieurs et inférieurs 76, plus profonds que les alvéoles 75 de la rangée centrale, par des fenêtres latérales non référencées.

Ces cheminées 77 sont au pas des connexions de la rangée supérieure de la face arrière de chaque galette. Elles reçoivent les queues de connexion 56A des contacts 56 bloqués dans les alvéoles supérieurs et inférieurs 76, ces queues de connexion étant elles-mêmes saillantes en bout des cheminées.

Le collecteur de masse 57 est quant à lui monté dans la rangée centrale d'alvéoles 75 non complètement compartimentés pour laisser leur fond continu. Ce collecteur de masse est constitué par une lame métallique conductrice à paires de languettes latérales 57B repliées et s'étendant dans les alvéoles de cette rangée centrale. Elles forment chacune une connexion élastique de serrage de la patte de masse de chaque parafoudre reçue entre les languettes concernées.

La queue de connexion 57A de ce collecteur de masse est simplement pliée sur la lame initiale, en sens opposé des languettes 57B. Elle vient dans un alvéole terminal supplémentaire 75A de la rangée centrale d'alvéoles 75. Cet alvéole supplémentaire 75A est prolongé par la patte latérale 50A saillante à l'avant du boîtier 50, qui retient intérieurement contre elle l'extrémité de la queue de connexion 57B.

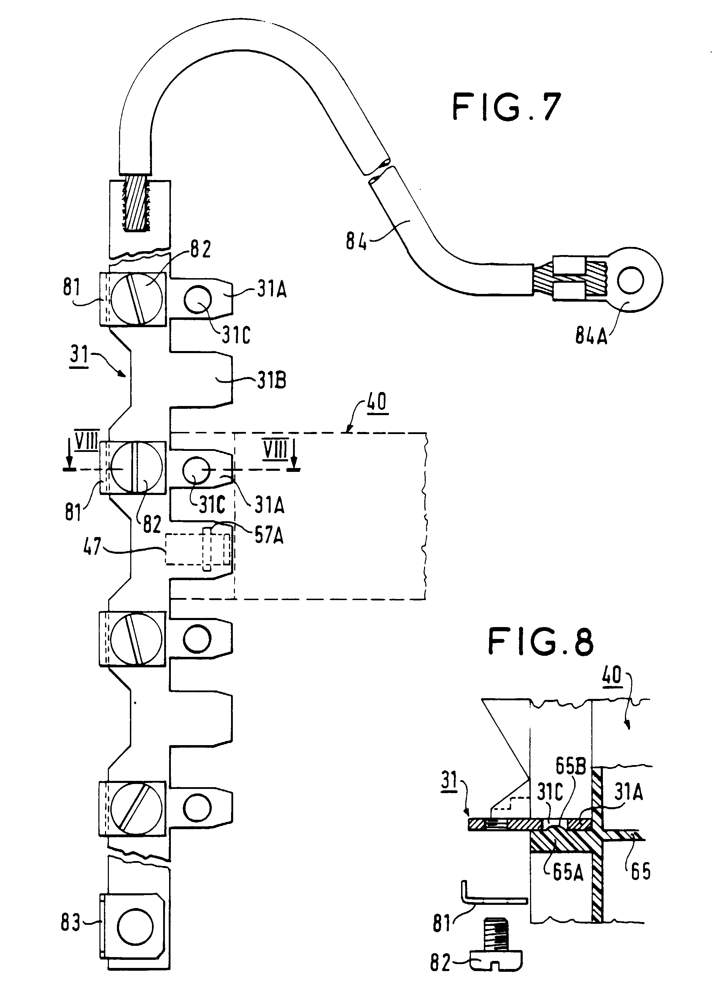

La liaison du collecteur de masse 57 du module de protection et de la barrette de masse 31 affectée aux galettes 40 de chaque ensemble de connexion est précisée en regard des figures 7 et 8 et de la figure 3 pour ce qui concerne cette barrette et en regard de la figure 3 seule pour ce qui concerne le contact de liaison 47 dans chaque galette.

La barrette 31 est une barre métallique conductrice montée verticale sur la hauteur de l'ensemble et encastrée partiellement dans les galettes. La figure 7 montre que cette barrette présente d'un même côté, pour chaque galette 40, deux pattes 31A et 31B. La première 31A supérieure et plus étroite que l'autre est dite de retenue dans la galette. Elle s'insère dans la partie latérale supérieure de la galette. Elle présente un trou 31C affecté à un bon accrochage relatif de la barrette et de chacune des différentes galettes individuelles. La deuxième patte 31B est dite de liaison avec le contact de liaison de masse 47 et vient dans la partie latérale médiane de chaque galette.

La barrette de masse 31 porte sur sa face avant, quand elle est considérée en place sur l'empilement des galettes, des étriers de fixation 81, pour les différentes galettes. Chaque étrier est fixé par une vis 82 sur la barrette, en regard de chaque patte supérieure de retenue 31A. Les étriers s'étendent sur la largeur de la barrette mais ne recouvrent pas les pattes 31A ; leur bord est replié et vient en butée contre le bord de la barrette exempt de pattes 31A et 31B. Chacun d'eux reçoit, entre lui et la barrette, le fil d'écran 10A des jarretières 10 ou 10' desservant la galette concernée, avant le guidage, sans écran, de leurs deux fils maintenus torsadés dans le guide fils 46 monté dans la partie avant du corps de la galette.

Cette barrette de masse a en outre, à l'une de ses extrémités, par exemple inférieure une cosse 83 de prise de masse pour des mesures éventuelles, et reçoit à l'autre de ces extrémités un cordon 84 de mise à la masse générale de la tête, donnée par son profilé porteur. Ce cordon 84 est soudé à la barrette et équipé à l'opposé d'une cosse terminale de raccordement 84A.

Le contact de liaison de masse 47 est une lame ressort conductrice sensiblement en S. Il est monté et retenu par sa partie médiane dans une cheminée terminale supplémentaire 67A prévue à son effet à l'une des extrémités de la rangée de cheminées arrière 67 du corps de la galette.

Cette cheminée terminale supplémentaire 67A est prolongée vers l'arrière du corps 41 par la patte saillante extérieurement d'articulation 22 précitée.

Une excroissance latérale 65A, prolongeant sensiblement l'entretoise de séparation 65 sur la moitié supérieure du corps forme le fond de cette cheminée. Elle laisse une fenêtre latérale d'accès pour pattes 31A et 31B de la barrette de masse, dans le fond. Cette excroissance 65A porte un bossage 65B saillant vers l'intérieur sur le fond, engagé dans le trou 31C de la patte de retenue 31A de la barrette de masse 31 (figure 8).

La patte 50A du boîtier 50 du module de protection 5 s'engage dans cette cheminée terminale 67A, contre la face interne de sa paroi externe.

Le contact de liaison de masse 47 est retenu contre la paroi interne ou cloison 69 entre cette cheminée terminale 67A et la cheminée 67 adjacente, par une patte interne de retenue 67B. L'une de ses extrémités s'étend dans le fond, en regard de la patte de liaison 31B. Elle a sa cambrure tournée vers le fond et en pression contre cette patte de liaison. L'autre de ses extrémités s'étend dans la cheminée 67A, le long de la partie terminale arrière de la cloison 69. Elle a sa cambrure tournée vers l'intérieur et reçoit en pression contre elle la queue de connexion 57A du collecteur de masse 57 du module de protection 5 correspondant.

Le guidage des jarretières dans la partie avant du corps de la galette 40, leur raccordement sur la face avant et le raccordement des conducteurs de câble sur la face arrière sont précisés ci-après, en se référant aux figures 2 à 4.

Le guide fils 46 est constitué par une plaque isolante à nervures arquées 46A sur l'une et l'autre de ses faces, s'étendant de l'un de ses bords latéraux à son bord avant. Ces nervures définissent entre elles sur chaque face quatre canaux 46B, ou en variante quatre canaux sur l'une des faces et trois sur l'autre, pour les deux fils de sept jarretières de ligne 10 et éventuellement les deux fils de sept jarretières supplémentaires dites de dérivation 10'. Le guide de fils 46 est encliqueté entre les deux rangées de cheminées avant 66. Il amène directement, par paire de fils torsadés, les sept jarretières à leurs deux connexions avant successives 45 de la même rangée.

Le raccordement des deux fils de chaque jarretière de ligne 10 est réalisé simultanément par l'un des poussoirs doubles 35 de la rangée supérieure. Le raccordement des deux fils de chaque jarretière de dérivation 10' est réalisé simultanément par l'un des poussoirs doubles 36, indépendants des premiers, afin que la connexion ou déconnexion de l'une ou l'autre des jarretières de dérivation ne perturbe pas la ligne.

Les conducteurs du câble, retenus ensemble par jeu de sept paires puis guidés jusqu'à l'arrière de la galette concernée par le passage 8 convenable de la charnière passe fils 6, sont quant à eux reçus dans un canal unique 85 prévu à leur effet sous la partie arrière de la galette concernée, sur la longueur de sa face arrière. Ce canal est défini directement par deux galettes consécutives, à l'arrière de leur système de queue d'aronde 42 d'accrochage. Une série de dents 85A saillantes au dessus de chaque galette, le long du bord arrière de sa face supérieure, et une autre série de dents 85B décalées par rapport aux précédentes et saillantes au-dessous de chaque galette, le long du bord arrière de sa face inférieure, définissent le bord arrière de retenue des conducteurs dans chaque canal 85. Elles permettent aussi la séparation des conducteurs et leur accès pour leur raccordement aux connexions arrière 64 le long de la face arrière de la galette.

On note en outre, qu'une série de fenêtres terminales arrière 85F centrées sur les connexions arrière individuelles affectées aux conducteurs de câble relie le canal 85 et chacune des cheminées arrière 67, pour le passage de chaque conducteur raccordé.

Le raccordement des conducteurs sur leurs connexions 64 est assuré par les poussoirs doubles 37 réalisant le raccordement simultané des deux conducteurs d'une même paire.

Les poussoirs 35, 36 et 37 sont identiques entre eux. Ces poussoirs sont en tant que tels globalement connus comme moyens de raccordement d'un ou de deux fils, sans dénudage préalable, dans une ou deux connexions autodénudantes. Ils sont, dans cette tête de câble, avantageusement utilisés pour le raccordement simultané de deux conducteurs ou de deux fils de jarretière d'une même ligne et pour le raccordement simultané de deux fils de dérivation sur cette ligne et sont adaptés aux galettes et à leurs contacts de ligne qui permettent ces raccordements.

On décrit ci-après ces poussoirs doubles, en regard de l'un des poussoirs 36 de la figure 2 ou 4 pour les deux connexions autodénudantes correspondantes dans leurs cheminées individuelles.

Le poussoir 36 est à deux jambages 91 et 92 reçus dans les deux cheminées et réunis par une tête terminale 93 centrée sur les deux jambages et restant extérieure aux cheminées en bout desquelles elle vient en butée. Pour ses conditions d'utilisation ce poussoir est dit horizontal.

Les deux jambages sont fendus horizontalement et divisés l'un et l'autre en une longue patte telle que 91A et une petite patte telle que 91B, pour le jambage 91, les pattes de même nature étant d'un même côté de la fente des deux jambages. Un trou 94 dans chaque jambage traverse verticalement sa longue patte et sa petite patte. Il reçoit l'un des deux fils ou conducteurs, non dénudé, et le retient pour permettre son raccordement ou sa déconnexion à la connexion autodénudante reçue dans la fente, quand le jambage coulisse sur elle. Une butée 95 sur la face extérieure de chaque longue patte, en regard du trou 94 permet l'arrêt du fil, introduit dans le trou depuis son ouverture sur la petite patte, et forme oeilleton de visualisation de présence de fil en place dans le trou, pour le raccordement et après le raccordement à chaque connexion autodénudante.

La longue patte 91A est échancrée sur la face interne de sa partie saillante sur la petite patte et présente une dent terminale 96, saillante du côté intérieur. Cette dent terminale sur chacune des longues pattes des deux jambages rend le poussoir imperdable dans ses cheminées, lors de la déconnexion. La butée pour chacune de ces dents est réalisée sur chacune des deux connexions autodénudantes, par le crevage tel que le crevage 62D pour la connexion autodénudage 62 (figure 5) ainsi que reporté dans la figure 4 sur la butée pour le jambage 91 du poussoir 36.

Deux trous horizontaux 93A et 93B traversent l'embase de la tête 93 sur les deux jambages pour des tests éventuels de ligne. Les poussoirs peuvent être de deux couleurs pour faciliter le répérage des lignes. Ils peuvent, en variante ou en option, en particulier pour les poussoirs avant, recevoir des capuchons de différentes couleurs, tels que le capuchon 97 pour le repérage des lignes ou de certaines lignes seulement, ce capuchon venant recouvrir la face frontale de la tête et présentant des petites pattes de blocage 97A reçues dans des empreintes correspondantes non référencées de la tête (figure 4).

En outre, indépendamment des dispositions précitées de repérage de lignes, on prévoit d'autres dispositions permettant le plombage de certaines lignes.

Ces dernières dispositions sont un trou vertical 93C dans la tête de chaque poussoir, des pattes 68A à oeilleton 68B laissées saillantes sur le bord extérieur des cheminées avant 66, en bout des cloisons 68 séparant les deux cheminées correspondant à une même ligne, et un lien 98 enfilé dans le trou 93C et l'oeilleton de la patte 68A et plombé (figure 4).

Ces dernières dispositions peuvent aussi être, pour une rangée complète des 7 lignes d'une même galette, un couvercle 99 recouvrant les poussoirs de la face avant de la galette, s'encliquetant sur des pattes latérales avant 41A du corps de la galette et retenu par un lien 99A plombé, de manière analogue aux poussoirs individuels (figure 2).

En regard de la figure 4, on voit clairement que les poussoirs 35 et 37 sont simplement montés retournés par rapport aux poussoirs 36. Mis en position dite tirée, ainsi que montré en 35' pour le poussoir 35, ils reçoivent directement chacun la paire de fils provenant de leur canal de guidage. On note en regard des poussoirs arrière 37, s'étendant directement sous la rangée de cheminées 77 du module de protection, que leur actionnement en position tirée ne peut se faire qu'en l'absence de module de protection. Ce raccordement des paires conducteurs de conducteurs en face arrière se fait tête de câble ouverte (figure 1). Les modules de protection sont enfichés sur les galettes après avoir effectués tous les raccordements de conducteurs. On note qu'un test des parafoudres est réalisé par un connecteur spécifique, non illustré, avant l'enfichage de chacun des modules sur les galettes. Bien entendu tel test peut être réalisé à tout autre moment opportun.

De manière comparable des tests sont possibles à tout moment souhaité sur la face avant de la tête ou de ses galettes individuelles à travers les trous de test des poussoirs avant.

La présente invention a été décrite ci-avant en regard du mode préféré de réalisation illustré dans les dessins. Il est évident que l'on peut y apporter des modifications à portée de l'homme de l'art sans pour autant sortir du cadre de la présente invention. En particulier les raccordements des fils de jarretières de ligne et/ou de jarretières de dérivation et/ou des conducteurs de câble peuvent être réalisés par des poussoirs simples ou sans poussoir par un outil spécial.

## Revendications

1. Tête de câble à protection pour répartiteur téléphonique, comportant
- un profilé porteur métallique (1) de fixation sur le répartiteur, recevant au moins un câble à paires de conducteurs multiples,
- au moins un ensemble de connexion (4) fixé sur ledit profilé par l'intermédiaire d'un axe latéral (7) solidaire du profilé, pour son ouverture et sa fermeture sur le profilé, et formé par une pluralité de galettes de connexion (40) identiques empilées verticalement les unes sur les autres, avec chaque galette dans son ensemble considéré fermé sur le profilé équipée de connexions arrière de ligne (64) sur l'une de ses faces dite arrière, de raccordement des paires de conducteurs de câble (2), et de connexions avant de ligne (61) sur la face opposée dite avant, de raccordement de paires de fils de jarretières de ligne (10), pour le raccordement de lignes,
- des modules de protection de ligne (5), enfichables dans les galettes individuelles, chacun à dispositifs internes de protection (52) raccordés aux lignes individuelles, pour leur protection contre des surtensions,
ladite tête étant caractérisée en ce que lesdites galettes (40) comportent, extérieurement, un système de queue d'aronde (42), à partie mâle (42A) et partie femelle (42B) complémentaires, sur leurs faces dites supérieure et inférieure, respectivement, s'étendant parallèlement aux bords avant et arrière desdites faces supérieure et inférieure, pour l'accrochage direct en place des galettes individuelles et leur retrait dans l'ensemble de connexion (4) auquel chacune d'elles appartient, quand ledit ensemble de connexion est ouvert sur le profilé.

2. Tête de câble selon la revendication 1, caractérisée en ce que ledit système de queue d'aronde (42) est discontinu relativement à la longueur totale desdits bords avant et arrière.

3. Tête de câble selon la revendication 2, caractérisée en ce que ledit système de queue d'aronde (42) est à parties mâle et femelle (42A, 42B) complémentaires l'une de l'autre sur les seules parties terminales des faces supérieure et inférieure respectives, correspondant aux deux parties terminales de leurs bords avant et arrière.

4. Tête de câble selon l'une des revendications 1 à 3, caractérisée en ce qu'elle comporte des moyens latéraux de butée (31), s'opposant à la translation dans un premier sens des galettes individuelles dans leur ensemble de connexion, et une paire de bossages (43A, 43B) sur lesdites faces supérieure et inférieure de chaque galette, respectivement, sur la trajectoire de guidage de l'une des galettes sur celle adjacente, s opposant à la translation dans le sens opposé au premier des galettes individuelles.

5. Tête de câble selon l'une des revendications 1 à 4, caractérisée en ce que chaque galette est en outre équipée de connexions arrière de protection de ligne (63) chacune directement reliée dans la galette à l'une des connexions arrière ligne et l'une des connexions avant de ligne, et que chaque module de protection (5) est enfichable sur la face arrière de l'une quelconque des galettes (40).

6. Tête de câble selon la revendication 5, carctérisée en ce que chaque module de protection comporte un boîtier, dans lequel lesdits dispositifs de protection (52) sont montés dans une partie dite arrière compartimentée du module considéré enfiché, des contacts dits de masse (57B) montés dans une partie dite avant du boîtier, en recevant chacun une patte de masse (53) de chaque dispositif (52) et en étant reliés à une masse commune, et des contacts dits de protection de ligne (56) montés également dans ladite partie avant du boîtier, recevant chacun une patte de ligne (54) de chaque dispositif (52) et présentant une queue de connexion (56A), saillante sur la face avant du boîtier, se raccordant à l'une des connexions arrière de protection de ligne de la galette à laquelle elle correspond.

7. Tête de câble selon l'une des revendications 5 et 6, caractérisée en ce que lesdites galettes (40) sont en outre équipées de connexions avant de dérivation (62), chacune reliée directement à l'une des connexions avant de ligne (61) et à la connexion arrière de ligne et la connexion arrière de protection de ligne correspondantes, en appartenant à un même contact de ligne (45).

8. Tête de câble selon la revendication 7, caractérisée en ce que lesdites connexions avant de ligne et de dérivation et lesdites connexions arrière de ligne sont des connexions autodénudantes et s'étendent en une rangée de connexions avant de ligne et une rangée de connexions avant de dérivation, le long de ladite face avant de chaque galette, et en une rangée de connexions arrière de ligne sur la face arrière de la galette, lesdites connexions arrière de protection de ligne étant des connexions à serrage et étant disposées en une autre rangée sur ladite face arrière de la galette.

9. Tête de câble selon la revendication 8, caractérisée en ce que chaque contact de ligne est dit en H, avec les deux connexions avant et la connexion arrière de ligne de ce contact pliées à angle droit sensiblement d'un même côté du jambage entretoise (60) du H et la connexion arrière de protection sensiblement dans le prolongement dudit jambage entretoise (60).

10. Tête de câble selon l'une des revendications 8 et 9, caractérisée en ce que chaque galette est formée dans un corps isolant (41) creux intérieurement dont les parois définissent les faces de la galette, et en ce que ledit corps présente une entretoise de séparation (65), le divisant en une partie avant et une partie arrière, et comporte une rangée de cheminées avant (66) pour les connexions avant individuelles, dans chacune des parois supérieure et inférieure de ladite partie avant.

11. Tête de câble selon la revendication 10, caractérisée en ce que chaque galette comporte en outre un guide fils (46) retenu entre les deux rangées de cheminées avant (66), ledit guide fils étant à canaux (46B) ouverts latéralement et le long du bord avant du guide fils en place dans la galette, sur l'une et l'autre de ses deux faces, pour les fils de jarretières de ligne et de dérivation.

12. Tête de câble selon la revendication 11, caractérisée en ce que ledit guide fils (46) est à nombre total réduit de canaux (46B), chacun affecté à une paire de fils de jarretière de ligne (10) et à une paire de fils de jarretière de dérivation (10').

13. Tête de câble selon l'une des revendications 10 à 12, caractérisée en ce que sur ladite partie arrière l'une des grandes faces supérieure et inférieure de la galette est en retrait par rapport à cette même grande face sur ladite partie avant et définit avec la galette adjacente, à l'arrière dudit système de queue d'aronde (42), dans ledit ensemble, un canal (85) de guidage des paires de conducteurs de câble (2) sur la longueur de sa face arrière.

14. Tête de câble selon la revendication 11, caractérisée en ce que ledit canal (85) est à côté dit arrière ajouré et défini par des dents saillantes alternées (85A, 85B) sur le bord arrière supérieur et le bord arrière inférieur de deux galettes adjacentes (40) dudit ensemble.

15. Tête de câble selon l'une des revendications 13 et 14, caractérisée en ce que la partie arrière du corps de chaque galette est compartimentée en une rangée de cheminées arrière (67), commune chacune pour l'une des connexions arrière de ligne et la connexion arrière de protection de ligne correspondante, la connexion arrière de ligne étant la plus proche dudit canal.

16. Tête de câble selon l'une des revendications 10 à 15, caractérisée en ce que chaque galette porte deux rangées de poussoirs avant (35, 36) et une rangée de poussoirs arrière (37) montés coulissants sur lesdites connexions avant de ligne et de dérivation et sur lesdites connexions arrière de ligne dans ledit corps, à tête restant saillante sur la face avant ou arrière concernée de la galette, pour leur actionnement entre une position dite enfoncée de raccordement et une position dite tirée d'insertion de fil ou conducteur dans le poussoir.

17. Tête de câble selon la revendication 16, caractérisée en ce que chaque poussoir (35, 36) comporte au moins un jambage fendu (91, 92) chacun coulissant sur la connexion autodénudante concernée, à longue patte (91A) et petite patte tronquée (91B) de part et d'autre de sa fente, toutes deux traversées par le fil ou conducteur, à raccorder à la connexion autodénudante concernée, reçu du côté de la petite patte et bloqué par une butée extérieure (95) sur la grande patte.

18. Tête de câble selon la revendication 17, caractérisée en ce que ladite longue patte (91A) est échancrée sur sa face interne en regard de la connexion autodénudante sur laquelle coulisse ledit jambage auquel elle appartient et présente une dent terminale (96) saillante intérieurement, et que la connexion autodénudante présente un crevage (61D, 62D, 64D) de butée de ladite dent (96) pour la position dite tirée du poussoir sur la connexion autodénudante.

19. Tête de câble selon l'une des revendications 16 à 18, caractérisée en ce que lesdits poussoirs sont de type double à deux jambages réunis par la même tête, affectés chacun au raccordement simultané d'une même paire de fils ou conducteurs sur les deux connexions autodénudantes correspondantes adjacentes dans leur rangée.

20. Tête de câble selon l'une des revendications 16 à 19, caractérisée en ce que la tête (93) de chaque poussoir est équipée pour recevoir des moyens frontaux (97) d'identification de ligne.

21. Tête de câble selon l'une des revendications 16 à 17, caractérisée en ce que la tête (93) de chaque poussoir comporte un trou (93C) dit de blocage de poussoir en position enfoncée et en ce que le corps de chaque galette comporte des pattes saillantes (68A) sur sa face avant, associées aux poussoirs avant pour le blocage et plombage sélectif ou collectif en position enfoncée des poussoirs avant sur cette galette.

22. Tête de câble selon l'une des revendications 10 à 21, caractérisée en ce que chaque galette comporte une cheminée supplémentaire (67A), dite de raccordement de masse, saillante latéralement sur la partie arrière du corps de la galette, dans lequel est monté un contact de liaison masse (47) reçu en contact à pression contre une barrette de masse (31), et accessible au bout de ladite cheminée supplémentaire (67A) ouverte sur la face arrière du corps, ladite barrette de masse s'étendant latéralement sur la hauteur de l'ensemble de connexion (4), des fils d'écran de masse des jarretières (10, 10') desservant chaque galette et étant raccordée audit profilé porteur (1).

23. Tête de câble selon la revendication 22, caractérisée en ce que ladite barrette de masse (31) est à jeux de deux languettes, l'une dite de retenue (31A) et l'autre dite de liaison (31B), saillantes sur l'un de ses bords reçues dans les galettes individuelles dudit ensemble, et à étriers (81) bloqués au pas desdites galettes dudit ensemble (4) sur l'une de ses faces dite avant de la barrette sur cet ensemble, de raccordement des fils d'écran de masse de leurs jarretières.

24. Tête de câble selon l'une des revendications 22 et 23, caractérisée en ce que lesdits contacts de masse (57B) dans chaque module de protection (5) appartiennent à un même collecteur de masse (57) et constituent des paires de pattes élastiques sur ce collecteur de masse, au pas desdits dispositifs de protection (52), de serrage entre elles de la patte de masse des dispositifs de protection, et en ce que ledit collecteur de masse (31) est monté sur la longueur du module de protection et présente une queue de connexion terminale (57A) saillante sur l'arrière de la face avant du module, à l'une de ses extrémités correspondant à la cheminée supplémentaire (67A) de masse de la galette, et reçue en pression contre ledit contact de liaison de masse (47).

25. Tête de câble selon l'une des revendications 8 à 24, caractérisée en ce que lesdits dispositifs de protection (52) sont des parafoudres tripolaires, chacun à deux pattes de ligne, de part et d'autre de la patte de masse du parafoudre considéré, auxquels correspondent deux desdits contacts de protection ligne (56) par parafoudre, montés de part et d'autre du contact de masse (57B) pour ce parafoudre et présentant leurs queues de connexion (56A) saillantes en bout de cheminées individuelles arrière en une rangée, sur la face avant de chaque module.

26. Tête de câble selon la revendication 25, caractérisée en ce que lesdits contacts de protection de ligne (56) sont identiques entre eux et chacun formé dans une lame conductrice découpée et pliée, présentant deux pattes terminales de serrage entre elles de l'une des pattes de ligne de parafoudre et la queue de connexion à l'opposé et à niveau différent des pattes terminales de serrage, les deux contacts de protection de ligne (56) du même parafoudre étant montés retournés l'un par rapport à l'autre.

## Patentansprüche

1. Kabelkopf zum Schutz eines Telefonverteilers,
- mit einer metallischen Tragschiene (1) zur Befestigung auf dem Verteiler, die mindestens ein Kabel mit zahlreichen Leiterpaaren empfängt,
- mit mindestens einer Anschlußeinheit (4), die auf der Tragschiene über eine seitliche, mit der Tragschiene fest verbundene Achse (7) befestigt ist und auf der Tragschiene geöffnet und geschlossen werden kann sowie aus einer Vielzahl von senkrecht gestapelten gleichen Anschlußscheiben (40) gebildet wird, wobei jede Scheibe in der geschlossenen Stellung auf der Tragschiene mit hinteren Leitungsanschlüssen (64) auf einer Hinterseite zum Anschluß der Paare von Kabelleitern (2) und mit vorderen Leitungsanschlüssen (61) auf der entgegengesetzten, also der Vorderseite, zum Anschluß von Leiterpaaren von Leitungsschaltbrücken (10) zum Anschluß der Leitungen versehen ist,
- mit Leitungsschutzmoduln (5), die in die einzelnen Scheiben einsteckbar sind und je innere Schutzvorrichtungen (52) enthalten, die an die einzelnen Leitungen zu deren Schutz gegen Überspannungen angeschlossen sind,
dadurch gekennzeichnet, daß die Scheiben (40) außen ein Schwalbenschwanzsystem (42) mit einem vorspringenden Bereich (42A) und einem dazu komplementären hohlen Bereich (42B) auf ihrer Oberseite bzw. ihrer Unterseite besitzen, das sich parallel zu den vorderen und hinteren Rändern der Oberseite und Unterseite erstreckt, so daß die einzelnen Scheiben unmittelbar zusammengesteckt oder aus einer Anschlußeinheit (4) entnommen werden können, zu der sie gehören, wenn die Anschlußeinheit auf der Tragschiene geöffnet ist.

2. Kabelkopf nach Anspruch 1, dadurch gekennzeichnet, daß das Schwalbenschwanzsystem (42) relativ zur Gesamtlänge der vorderen und hinteren Ränder unterbrochen ist.

3. Kabelkopf nach Anspruch 2, dadurch gekennzeichnet, daß das Schwalbenschwanzsystem (42) nur in den Endbereichen der Oberseite und der Unterseite entsprechend den beiden Endbereichen ihrer vorderen und hinteren Ränder aus vorspringenden und dazu komplementären hohlen Bereichen (42A, 42B) besteht.

4. Kabelkopf nach einem der Ansprüche 1 bis 3, dadurch gekennzeichnet, daß er seitliche Anschlagmittel (31), die einer Verschiebung der einzelnen Scheiben in ihrer Anschlußeinheit in einer ersten Richtung verhindern, sowie zwei Erhebungen (43A, 43B) auf der Oberseite und Unterseite jeder Scheibe bzw. im Verlauf der Führung einer der Scheiben bezüglich der benachbarten aufweist, die eine Verschiebung der einzelnen Scheiben in Gegenrichtung zu der erstgenannten Richtung verhindern.

5. Kabelkopf nach einem der Ansprüche 1 bis 4, dadurch gekennzeichnet, daß jede Scheibe weiter hintere Leitungsschutzanschlüsse (63) aufweist, die je unmittelbar in der Scheibe an einen der hinteren Leitungsanschlüsse und einen der vorderen Leitungsanschlüsse angeschlossen sind, und daß jeder Schutzmodul (5) auf die Rückseite einer beliebigen der Scheiben (40) aufsteckbar ist.

6. Kabelkopf nach Anspruch 5, dadurch gekennzeichnet, daß jeder Schutzmodul ein Gehäuse aufweist, in dem die Schutzvorrichtungen (52) in einem rückwärtigen, in Fächer unterteilten Bereich des betrachteten eingesteckten Moduls montiert sind, wobei Massekontakte (57B) in einem vorderen Bereich des Gehäuses montiert sind und je eine Masselasche (53) jeder Vorrichtung (52) aufnehmen sowie an eine gemeinsame Masse angeschlossen sind, und daß Leitungsschutzkontakte (56) ebenfalls im vorderen Bereich des Gehäuses montiert sind, die je eine Leitungslasche (54) jeder Vorrichtung (52) empfangen und eine auf der Vorderseite des Gehäuses vorstehende Anschlußfahne (56) bilden, die an einen der rückwärtigen Leitungsschutzanschlüsse der Scheibe angeschlossen ist, der diese Fahne entspricht.

7. Kabelkopf nach einem der Ansprüche 5 und 6, dadurch gekennzeichnet, daß die Scheiben (40) außerdem vordere Abzweigungsanschlüsse (62) aufweisen, die je unmittelbar an einen der vorderen Leitungsanschlüsse (61) und an den rückwärtigen Leitungsanschluß sowie den zugehörigen rückwärtigen Leitungsschutzanschluß angeschlossen sind und zu einem gemeinsamen Leitungskontakt (45) gehören.

8. Kabelkopf nach Anspruch 7, dadurch gekennzeichnet, daß die vorderen Leitungsanschlüsse und die Abzweigungsanschlüsse sowie die rückwärtigen Leitungsanschlüsse die Isolierung durchschneidende Anschlüsse sind und sich in einer vorderen Leitungsanschlußreihe und einer vorderen Abzweigungsanschlußreihe entlang der Vorderseite jeder Scheibe sowie in einer hinteren Leitungsanschlußreihe über die Hinterseite der Scheibe erstrecken, wobei die hinteren Leitungsschutzanschlüsse Klemmkontakte sind und in einer weiteren Reihe auf der Rückseite der Scheibe angeordnet sind.

9. Kabelkopf nach Anspruch 8, dadurch gekennzeichnet, daß jeder Leitungskontakt H-förmig ist und zwei vordere sowie einen hinteren Leitungsanschluß dieses Kontakts besitzt, die im wesentlichen auf einer gemeinsamen Seite rechtwinklig zum Verbindungssteg (60) des H umgebogen sind, während der rückwärtige Schutzanschluß sich im wesentlichen in der Verlängerung des Verbindungsstegs (60) befindet.

10. Kabelkopf nach einem der Ansprüche 8 und 9, dadurch gekennzeichnet, daß jede Scheibe von einem hohlen Isolierkörper (41) gebildet wird, dessen Wände die Seiten der Scheibe bilden, und daß der Körper eine Trennwand (65) aufweist, die ihn in einen vorderen und einen rückwärtigen Bereich teilt, und eine Reihe von vorderen Schächten (66) für die vorderen Einzelanschlüsse in jeder der oberen und unteren Wände dieses vorderen Bereichs aufweist.

11. Kabelkopf nach Anspruch 10, dadurch gekennzeichnet, daß jede Scheibe weiter eine Drahtführung (46) aufweist, die zwischen den beiden vorderen Schachtreihen (66) gehalten wird und seitlich und entlang des vorderen Rands und auf beiden Seiten offene Kanäle (46B) aufweist, um die Leitungsund Abzweigungsschaltbrückendrähte zu führen, wenn die Drahtführung auf der Scheibe montiert ist.

12. Kabelkopf nach Anspruch 11, dadurch gekennzeichnet, daß die Drahtführung (46) eine beschränkte Gesamtanzahl von Kanälen (46B) aufweist, die je einem Drahtpaar der Leitungsschaltbrücke (10) bzw. einem Drahtpaar der Abzweigungsschaltbrücke (10') zugewiesen sind.

13. Kabelkopf nach einem der Ansprüche 10 bis 12, dadurch gekennzeichnet, daß der hintere Bereich einer der großen Seiten der Scheibe bezüglich dieser großen Seite über einen vorderen Bereich zurückgesetzt ist und mit der benachbarten Scheibe hinter dem Schwalbenschwanzsystem (42) in der Einheit einen Kanal (85) zur Führung der Leiterpaare des Kabels (2) über die Länge der hinteren Seite definiert.

14. Kabelkopf nach Anspruch 11, dadurch gekennzeichnet, daß der Kanal (85) eine ausgeschnittene Rückseite hat und durch abwechselnde, über den hinteren oberen Rand und den hinteren unteren Rand zweier benachbarter Scheiben (40) der Einheit vorstehende Zähne (85A, 85B) definiert ist.

15. Kabelkopf nach einem der Ansprüche 13 und 14, dadurch gekennzeichnet, daß der hintere Bereich des Körpers jeder Scheibe in eine hintere Reihe von Schächten (67) unterteilt ist, die je für eine der rückwärtigen Leitungsanschlüsse und den entsprechenden rückwärtigen Leitungsschutzanschluß gemeinsam vorhanden ist, wobei der rückseitige Leitungsanschluß dem Kanal am nächsten liegt.

16. Kabelkopf nach einem der Ansprüche 10 bis 15, dadurch gekennzeichnet, daß jede Scheibe zwei vordere Tastenreihen (35, 36) und eine hintere Tastenreihe (37) aufweist, die gleitend auf den vorderen Leitungs- und Abzweigungsanschlüssen und auf den hinteren Leitungsanschlüssen des Körpers montiert sind, wobei der Kopf über die Vorder- bzw. Rückseite der Scheibe für deren Betätigung zwischen einer eingedrückten Anschlußstellung und einer gezogenen Stellung vorsteht, in der der Draht oder Leiter in die Taste eingesteckt werden kann.

17. Kabelkopf nach Anspruch 16, dadurch gekennzeichnet, daß jede Taste (35, 36) mindestens einen geschlitzten Zweig (91, 92) aufweist, wobei jeder Zweig auf dem betreffenden, die Isolation durchschneidenden Kontakt gleitet und eine lange (91A) sowie eine abgeschnittene kurze Lasche (91B) zu beiden Seiten des Schlitzes besitzt, und daß beide Laschen von dem an den betreffenden Kontakt anzuschließenden Draht oder Leiter durchquert werden, wenn dieser von der Seite der kürzeren Lasche eingesteckt wird und an einem äußeren Anschlag (95) der großen Lasche blockiert wird.

18. Kabelkopf nach Anspruch 17, dadurch gekennzeichnet, daß die lange Lasche (91A) auf der Innenseite gegenüber dem Kontakt ausgeschnitten ist, auf dem der Zweig gleitet, zu dem die Lasche gehört, und einen nach innen vorspringenden Endhaken (96) besitzt, und daß der die Isolierung durchschneidende Kontakt einen Einschnitt (61D, 62D, 64D) bildet, der als Anschlag des Hakens (96) in der gezogenen Stellung der Taste auf dem Kontakt wirkt.

19. Kabelkopf nach einem der Ansprüche 16 bis 18, dadurch gekennzeichnet, daß die Tasten Doppeltasten mit zwei über einen gemeinsamen Kopf verbundenen Zweigen sind, die je für den gleichzeitigen Anschluß eines Draht- oder Leiterpaars an die beiden in ihrer Reihe benachbarten, entsprechenden, die Isolation durchschneidenden Kontakte geeignet sind.

20. Kabelkopf nach einem der Ansprüche 16 bis 19, dadurch gekennzeichnet, daß der Kopf (93) jeder Taste für das Anbringen von Leitungsidentifikationsmitteln (97) auf der Frontseite ausgebildet ist.

21. Kabelkopf nach einem der Ansprüche 16 bis 17, dadurch gekennzeichnet, daß der Kopf (93) jeder Taste ein Loch (93C) zur Blockierung der Taste in der eingedrückten Stellung aufweist und daß der Körper jeder Scheibe auf seiner Vorderseite vorspringende Laschen (68A) besitzt, die den vorderen Tasten zugeordnet sind und die selektive Blockierung und Plombierung oder die kollektive Blockierung und Plombierung der vorderen Tasten dieser Scheibe bewirken.

22. Kabelkopf nach einem der Ansprüche 10 bis 21, dadurch gekennzeichnet, daß die Scheibe einen zusätzlichen Schacht (67A) zum Masseanschluß besitzt, der seitlich im hinteren Bereich des Körpers der Scheibe vorsteht und in dem ein Masseanschlußkontakt (47) montiert ist, der in Druckkontakt mit einer Masseleiste (31) steht und am Ende des an der Rückseite des Körpers offenen zusätzlichen Schachts (67A) zugänglich ist, daß die Masseleiste sich seitlich über die Höhe der Anschlußeinheit (4) erstreckt und an die Tragschiene (1) angeschlossen ist, wobei Masseabschirmungsdrähte der Schaltbrücken (10, 10') jede Scheibe bedienen.

23. Kabelkopf nach Anspruch 22, dadurch gekennzeichnet, daß die Masseleiste (31) zwei Zungen besitzt, nämlich eine Haltezunge (31A) und eine Verbindungszunge (31B), die über einen der Ränder der Leiste vorstehen und in die einzelnen Scheiben der Einheit eindringen sowie Bügel (81) aufweisen, die im Abstand der Scheiben der Einheit (4) auf der Vorderseite der Leiste blockiert sind sowie zum Anschluß der Masseabschirmungsdrähte ihrer Schaltbrücken bestimmt sind.

24. Kabelkopf nach einem der Ansprüche 22 und 23, dadurch gekennzeichnet, daß die Massekontakte (57B) jedes Schutzmoduls (5) zu einem gemeinsamen Massekollektor (57) gehören und Paare von elastischen Laschen auf diesem Massekollektor im Abstand der Schutzvorrichtungen (52) bilden, die die Masselasche der enSchutzvorrichtung zwischen sich einklemmen, und daß der Massekollektor (31) über die Länge des Schutzmoduls montiert ist und eine von der Vorderseite des Moduls nach hinten an einem dem zusätzlichen Schacht (67A) für den Masseanschluß der Scheibe entsprechenden vorspringende Endanschlußfahne (57A) besitzt, die gegen den Masseverbindungsanschluß (47) drückt.

25. Kabelkopf nach einem der Ansprüche 8 bis 24, dadurch gekennzeichnet, daß die Schutzvorrichtungen (52) dreipolige Blitzableiter sind, die je zwei Leitungslaschen zu beiden Seiten der Masselasche des betrachteten Blitzableiters besitzen, denen zwei der Leitungsschutzkontakte (57) je Blitzableiter entsprechen, welche zu beiden Seiten des Massekontakts (57B) für diesen Blitzableiter montiert sind, wobei die Anschlußfahnen (56A) dieser Kontakte am Ende der einzelnen hinteren Schächte in einer Reihe über die Vorderseite jedes Moduls vorstehen.

26. Kabelkopf nach Anspruch 25, dadurch gekennzeichnet, daß die Leitungsschutzkontakte (56) einander gleichen und je von einer ausgestanzten und gebogenen leitenden Lamelle gebildet werden, die zwei Klemmlaschen für eine der Blitzableiter-Leitungslaschen sowie die Anschlußfahne am entgegengesetzten Ende in einer anderen Höhe als die Klemmlaschen bildet, wobei die beiden Leitungsschutzkontakte (56) eines Blitzableiters zueinander verkehrt herum montiert sind.

## Claims

1. Protected cable termination for telephone distribution frames including
- a metal support member (1) adapted to be fixed to the distribution frame and receiving at least one cable comprising multiple pairs of conductors,
- at least one connection assembly (4) fixed to said support member by a lateral spindle (7) attached to the support member to enable it to open and close on the support member and formed by a plurality of identical connection pallets (40) stacked vertically, with each pallet in its stack considered closed on the support member equipped with rear line connections (64) on a rear face, for connecting conductor pairs of a cable (2), and front line connections (61) on the opposite or front face, for connecting pairs of line jumper link wires (10) in order to connect lines,
- line protection modules (5) adapted to be plugged into the individual pallets and each having internal protection devices (52) connected to the individual lines to protect them against overvoltages,
said head being characterised in that said pallets (40) have a dovetail system (42) on the outside with complementary male parts (42A) and female parts (42B) on their top and bottom surfaces, respectively, extending parallel to the front and rear edges of said top and bottom faces, for direct attachment of individual pallets to and their removal from said connection assembly (4) of which each forms a part when said connection assembly is open on the support member.

2. Cable termination according to claim 1 characterised in that said dovetail system (42) is discontinuous along the length of said front and rear edges.

3. Cable termination according to claim 2 characterised in that said dovetail system (42) has complementary male and female parts (42A, 42B) only on end parts of the respective top and bottom faces, corresponding to two end parts of their front and rear edges.

4. Cable termination according to any one of claims 1 to 3 characterised in that it includes lateral abutment means (31) opposing movement in translation in a first direction of the individual pallets in their connection assembly and a pair of bosses (43A, 43B) on said top and bottom faces of each pallet, respectively, on the guide path of one of the pallets on the adjacent pallet, opposing movement in translation of the individual pallets in the opposite direction.

5. Cable termination according to any one of claims 1 to 4 characterised in that each pallet is further equipped with rear line protection connections (63) each connected directly in the pallet to one of the rear line connections and to one of the front line connections and in that each protection module (5) is adapted to be plugged into the rear face of any of the pallets (40).

6. Cable termination according to claim 5 characterised in that each protection module includes a box in which said protection devices (52) are mounted in a compartmented rear part of the plugged in module, earth contacts (57B) mounted in a front part of the box each receiving an earth lead (53) of each device (52) and being connected to a common earth, and line protection contacts (56) also mounted in said front part of the box, each receiving a line lead (54) of each device (52) and having a connecting tail (56A) projecting from the front face of the box and connected to one of the rear line protection connections of the corresponding pallet.

7. Cable termination according to claim 5 or claim 6 characterised in that said pallets (40) are further provided with front branch connections (62) each connected to one of the front line connections (61), one of the front line connections and the front branch connection, the corresponding rear line connection and rear protection connection being part of the same line contact (45).

8. Cable termination according to claim 7 characterised in that said front line connections and branch connections and said rear line connections are insulation displacement connections and extend in a row of front line connections and a row of front branch connections along said front face of each pallet and in a row of rear line connections on the rear face of the pallet, said rear line protection connections being clamp connections and being disposed in another row on said rear face of the pallet.

9. Cable termination according to claim 8 characterised in that each line contact is H-shaped with the two front connections and the rear line connection of the contact bent at substantially a right angle to the same side of the crossbar (60) of the H-shape and with the rear protection connection substantially aligned with said crossbar (60).

10. Cable termination according to claim 8 or claim 9 characterised in that each pallet is formed in an internally hollow insulative body (41) the walls of which define the faces of the pallet and in that said body has a partition (65) dividing it into a front part and a rear part and includes a row of front chimneys (66) for the individual front connections in each of the top and bottom walls of said front part.

11. Cable termination according to claim 10 characterised in that each pallet further includes a wire guide (46) retained between he two rows of front chimneys (66), said wire guide having laterally open channels (46B) for the line and branch connection jumper link wires along the front edge of the wire guide when in place in the pallet, on both of its two faces.

12. Cable termination according to claim 11 characterised in that said wire guide (46) has a small number of channels (46B) each assigned to one pair of line jumper link wires (10) and to one pair of branch connection jumper link wires (10').

13. Cable termination according to any one of claims 10 to 12 characterised in that said rear part of one of the top and bottom larger faces of the pallet is set back relative to the same larger face on said front part and defines with the adjacent pallet, at the rear of said dovetail system (42), in said assembly, a guide passage (85) for cable conductor pairs (2) along the length of the rear face.

14. Cable termination according to claim 11 characterised in that said channel (85) has an apertured rear side defined by alternate projecting teeth (85A, 85B) on the top rear edge and the bottom rear edge of two adjacent pallets (40) of said assembly.

15. Cable termination according to claim 13 or claim 14 characterised in that the rear part of the body of each pallet is compartmented to form a row of rear chimneys (67) each common to one of the rear line connections and the corresponding rear line protection connection, the rear line connection being nearer said channel.

16. Cable termination according to any one of claims 10 to 15 characterised in that each pallet carries two rows of front plungers (35, 36) and one row of rear plungers (37) slidably mounted on said front line and branch connections and on said rear line connections in said body, with a head projecting at all times from the front face or the rear face concerned of the pallet, for their actuation between a pushed in connection position and a pulled out position for inserting a wire or conductor in the plunger.

17. Cable termination according to claim 16 characterised in that each plunger (35, 36) includes at least one split leg (91, 92) each sliding over the insulation displacement connection concerned, with a long lug (91A) and a truncated short lug (91B) on opposite sides of its slot, through both of which passes the wire or conductor that is to be connected to the insulation displacement connection concerned, received from the short lug side and blocked by an external abutment 95 on the long lug.

18. Cable termination according to claim 17 characterised in that said long lug (91A) is notched on its inside face that faces the insulation displacement connection over which said leg of which it is part slides and has an inwardly projecting tooth (96) at the end and in that the insulation displacement connection has an upstanding tang (61D, 62D, 64D) providing an abutment for said tooth (96) in said pulled out position of the plunger on the insulation displacement connection.

19. Cable termination according to any one of claims 16 to 18 characterised in that said plungers are of a double type with two legs joined by a common head each assigned to the simultaneous connection of a common pair of wires or conductors to the two corresponding insulation displacement connections adjacent them in their row.

20. Cable termination according to any one of claims 16 to 19 characterised in that the head (93) of each plunger is adapted to receive line identifying means (97) at the front.

21. Cable termination according to claim 16 or claim 17 characterised in that the head (93) of each plunger includes a hole (93C) for immobilising the plunger in the pushed-in position and in that the body of each pallet includes projecting lugs (68A) on its front face associated with the front plungers for immobilising and selective or collective lead sealing in the pushed in position of front plungers of the pallet.

22. Cable termination according to any one of claims 10 to 21 characterised in that each pallet includes an additional earth connection chimney (67A) projecting laterally from the rear part of the body of the pallet in which is mounted an earth connection contact (47) pressed against an earth strip (31) and accessible at the end of said additional chimney (67A) opening onto the rear face of the body, said earth strip extending laterally over the height of the connection assembly (4), jumper link earth screen wires (10, 10') serving each pallet and being connected to said support member (1).

23. Cable termination according to claim 22 characterised in that said earth strip (31) has sets of two tangs, retaining tangs (31A) and connecting tangs (31B), projecting from one edge received in the individual pallets of said assembly and brackets (81) immobilised at the same pitch as said pallets of said assembly (4) on a front face of the strip in the assembly, for connecting earth screen wires of their jumper links.

24. Cable termination according to claim 22 or claim 23 characterised in that said earth contacts (57B) in each protection module (5) are part of a common earth collector (57) and constitute pairs of elastic lugs on the earth collector, at the same pitch as said protection devices (52), adapted to clamp between them the earth lead of the protection devices, and in that said earth collector (31) is mounted lengthwise on the protection module and has a connection tail (57A) projecting to the rear of the front face of the module at the end corresponding to the additional earth chimney (67A) of the pallet and pressed against said earth connecting contact (47).

25. Cable termination according to any one of claims 8 to 24 characterised in that said protection devices (52) are three-pole protectors each having two line leads on opposite sides of an earth lead of the protector concerned, to which there correspond two of said line protection contacts (56) per protector mounted on opposite sides of the earth contact (57B) for that protector and having their connection tails (56A) projecting from the end of individual rear chimneys of a row on the front face of each module.

26. Cable termination according to claim 25 characterised in that said line protection contacts (56) are identical and each is cut and bent from conductive sheetmetal so that it has two lugs at the end between which one of the line leads of the protector is clamped and the connecting tail at the opposite end and at a different level from the clamping leads at the end, the two line protection contacts (56) of each protector being inverted one with respect to the other.
